# EUROPEAN PATENT SPECIFICATION

(11) **EP 1 698 544 B1**
(45) Date of publication and mention of the grant of the patent: **18.03.2009**
(21) Application number: 04773453.8
(22) Date of filing: 21.09.2004
(51) Int. Cl.: B62D 25/08, B60K 23/02, B60T 7/06, B60R 21/09

(54) **PEDAL BRACKET ARRANGEMENT STRUCTURE**
PEDALHALTERUNGSANORDNUNGSKONSTRUKTION
STRUCTURE D'ENSEMBLE DE PEDALIER

(30) Priority: 22.09.2003 JP 2003330044
(43) Date of publication of application: 06.09.2006
(73) Proprietor: Daihatsu Motor Co., Ltd., Ikeda-shi, Osaka-fu 563-8651 (JP)
(72) Inventor: TSUJITA, Toshiya, c/o Daihatsu Motor Co., Ltd., Osaka 563-8651 (JP); YAMAOKA, Koji, c/o Daihatsu Motor Co., Ltd., Osaka 563-8651 (JP); OOKUBO, Shinsuke, c/o Daihatsu Motor Co., Ltd., Osaka 563-8651 (JP)
(74) Representative: Haley, Stephen
(86) International application number: PCT/JP2004/014141
(87) International publication number: WO 2005/028288

(56) References cited:
- FR-A1- 2 762 694
- JP-A- 2000 264 180
- JP-A- 2001 114 135
- JP-U- 60 163 123
- JP-Y2- 61 031 884
- US-A1- 2003 183 037

## Description

### TECHNICAL FIELD

The present invention relates to a mounting structure of a pedal bracket that supports a pedal such as a clutch pedal or a foot-operated parking pedal of an automobile, and more particularly to a pedal bracket mounting structure so designed to decrease the distance of backward movement of the lower part of the pedal when a load is input to the front of the vehicle. Such a structure is generally known.

### BACKGROUND ART

In conventional mounting structures of a brake pedal or the like, a pedal bracket that pivotally supports the pedal is secured to a dash panel; but when a load of more than a predetermined level is input to the front of the vehicle and the dash panel is displaced backward, the brake pedal also moves backward, posing a risk that it may hit part of the passenger's body.

Therefore, various structures have been proposed, which are so designed that the pedal moves relatively forward when the dash panel is displaced backward (see, for example, Japanese Patent Publication No. 10-181637 (& US-A-6041674)).

The structure shown in Japanese Patent Publication No. 10-181637 is described with reference to Fig. 3. A pedal bracket 32 that is connected to a brake booster 36 and supports the brake pedal 31 such that the pedal can swing forward and backward is divided into a front bracket 33 and a rear bracket 34, which are hinge-coupled to each other. The front bracket 33 is secured to the dash panel 35 where the brake booster 36 is positioned, while the rear part of the rear bracket 34 is fixed to a guide bracket 38 mounted on a pillar-to-pillar support member 37, which is hardly displaced backward even when the above-mentioned load is input, such that the rear part can move backward on a guide surface 39 extending diagonally downward and backward, when the above-mentioned load is input. The top end of the brake pedal 31 is pivoted to the rear bracket 34 by a pivot shaft 40.

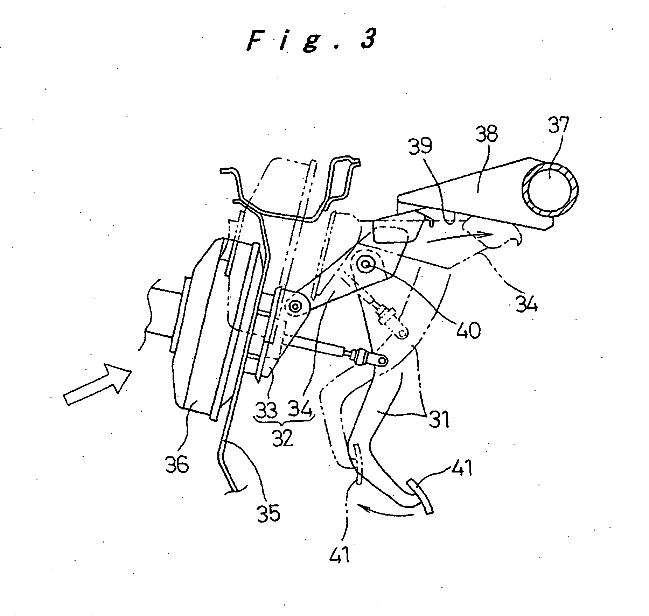

With this structure, when a load of more than a predetermined level is input to the front of the vehicle as indicated by the white arrow in Fig. 3 and the dash panel 35 and the brake booster 36 are displaced diagonally upward and backward, the rear part of the rear bracket 34 moves diagonally downward and backward along the guide surface 39 of the guide bracket 38 as indicated by the imaginary lines, whereby the pedal 41 at the lower part of the brake pedal 31, which is pivoted at its top end to the rear bracket 34, moves relatively forward as indicated by the arrow.

In another structure shown, for example, in Japanese Utility Model Publication No. 64-24684, a reinforcing member is provided to the lower part of the dash panel so as to increase the rigidity of the dash panel itself.

However, with the structure shown in Fig. 3, the high rigidity pillar-to-pillar support member 37 and the guide bracket 38 need to be provided, and the pedal bracket 32 has a complex structure, because of which the cost and weight are increased.

In view of the above-described problems in conventional techniques, an object of the present invention is to provide a pedal bracket mounting structure which, with a simple design, reliably causes the pedal to move relatively forward when a load is input to the front of the vehicle.

### DISCLOSURE OF THE INVENTION

To achieve the above object, the present invention provides a pedal bracket mounting structure wherein a reinforcing member is provided to a lower part of a dash panel, a pivotal support bracket part swingably supporting a pedal and a part reinforced by the reinforcing member are coupled together by a lower coupling bracket part, and the pivotal support bracket part and an upper part of the dash panel opposite a protrusion in an upper rear part of the engine are coupled together by an upper coupling bracket part, a coupling part between the upper coupling bracket part and the pivotal support bracket part being located lower than a coupling part between the upper coupling bracket part and the upper part of the dash panel, and a coupling part between the lower coupling bracket part and the pivotal support bracket part being located more forward than the coupling part between the upper coupling bracket part and the pivotal support bracket part.

With this structure, when a load of more than a predetermined level is input to the front of the vehicle, while the upper part of the dash panel is easily displaced backward, the lower part of the dash panel is less displaced backward because it is reinforced by the reinforcing member, and because the upper part of the pedal bracket is coupled to the upper part of the dash panel that is largely displaced backward and the lower part of the pedal bracket is coupled to the part that is less displaced, when a load of more than a predetermined level is input to the front of the vehicle, the pedal bracket moves diagonally downward and backward in a rotating manner, as a result of which the pedal bracket and the upper part of the pedal supported by the pedal bracket rotate downward by the backward displacement, causing the lower part of the pedal to move relatively forward, and the backward movement of the lower part of the pedal is thus reduced.

### BRIEF DESCRIPTION OF THE DRAWINGS

Fig. 1A and Fig. 1B are longitudinal cross-sectional side views illustrating one embodiment of the pedal bracket mounting structure of the present invention, Fig. 1A showing a state before it is operated and Fig. 1B showing a state after it is operated;
Fig. 2 is a front view of the same embodiment of the pedal bracket mounting structure, viewed from the vehicle interior side; and
Fig. 3 is a longitudinal cross-sectional side view illustrating a conventional pedal bracket mounting structure.

### BEST MODE FOR CARRYING OUT THE INVENTION

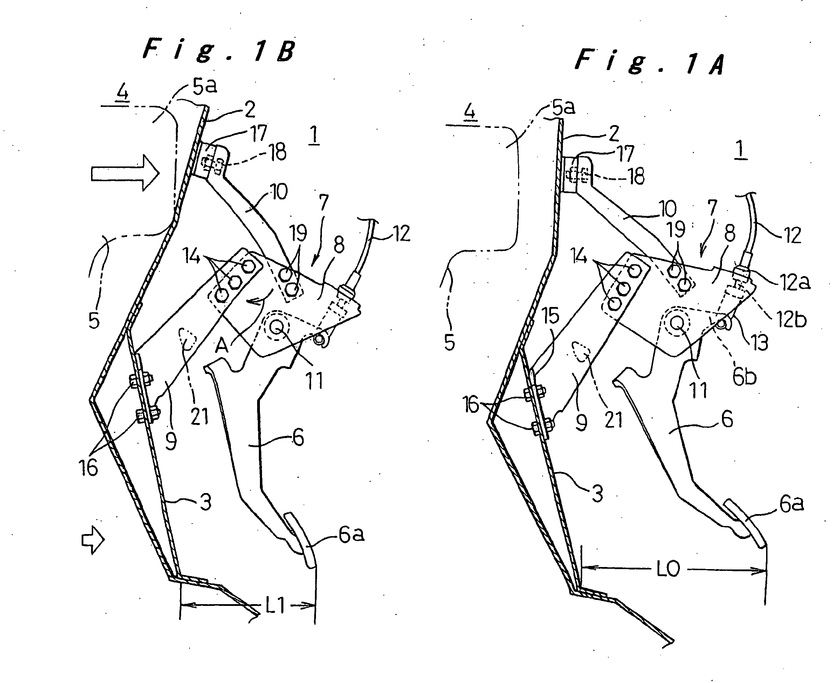

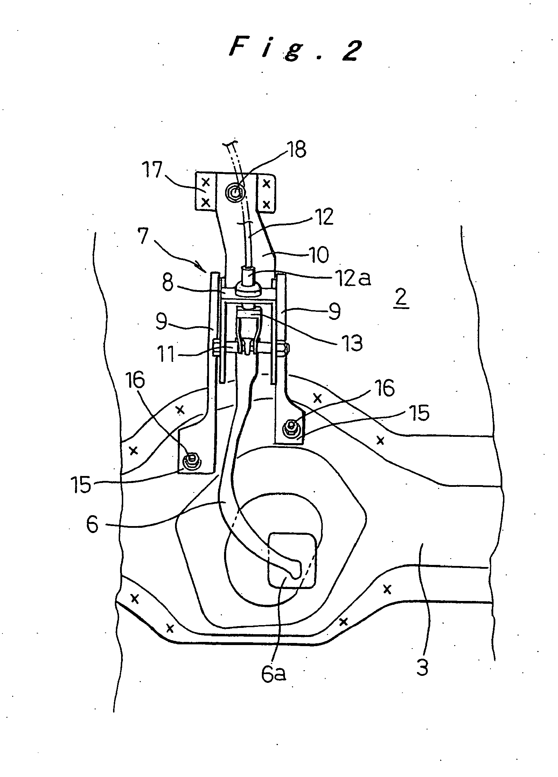

One embodiment of the pedal bracket mounting structure of the present invention will be hereinafter described with reference to Fig. 1A, Fig. 1B, and Fig. 2.

In Fig. 1A, Fig. 1B, and Fig. 2, the reference numeral 1 denotes a vehicle interior, and 2 denotes a dash panel forming a lower front surface at the front end of the vehicle interior. The lower end of the dash panel is connected to a floor panel that forms the floor surface of the vehicle interior 1, and a thick plate-like reinforcing member 3 extending in the vehicle width direction is joined to the lower part of the dash panel 2 so that the dash panel has a high support rigidity.

An engine room 4 is arranged to the front of the vehicle interior 1, being divided therefrom by the dash panel 2. An engine 5 placed in this engine room 4 has a protrusion 5a in the upper rear part for accommodating an intake manifold or the like, and the protrusion 5a is positioned opposite the upper part of the dash panel 2.

The reference numeral 6 denotes a clutch pedal, whose upper part is pivoted to a pedal bracket 7 such that the pedal swings forward and backward. The reference numeral 6a denotes a pedal footrest surface at the lower end of the clutch pedal 6, and 6b denotes a cable connection arm extending backward from the top end of the crutch pedal 6.

The pedal bracket 7 is composed of a pivotal support bracket part 8 for swingably supporting the crutch pedal 6, a lower coupling bracket part 9, and an upper coupling bracket part 10.

The pivotal support bracket part 8 is made of a metal plate material formed to have a gate-like cross section, a shaft 11 for swingably supporting the crutch pedal 6 extending through the middle in the front to back direction in the lower part, and one end 12a of an outer tubular member of a clutch operation cable 12 being fixedly attached to the top end in the rear part. The inner cable of the clutch operation cable 12 is connected at one end 12b to the distal end of the cable connection arm 6b via a metal coupler 13.

The lower coupling bracket part 9 connects the front end part of the pivotal support bracket part 8 with the reinforcing member 3, the upper part of the lower coupling bracket part being fixedly fastened to the outer surface on both sides of the front end part of the pivotal support bracket part 8 with bolts/nuts 14, and front mounting surfaces 15 formed at the lower end being fixedly fastened to the reinforcing member 3 with bolts/nuts 16.

The upper coupling bracket part 10 connects the upper middle part in the front to back direction of the pivotal support bracket part 8 with the upper part of the dash panel 2, the upper part of the upper coupling bracket part being fixedly fastened to a mounting washer 17 joined to the dash panel 2 with a bolt/nut 18, and the lower part being inserted into and fixedly fastened to the pivotal support bracket part 8 with bolts/nuts 19.

The above structure, when a load of more than a predetermined level is input to the front of the vehicle, transforms from the state shown in Fig. 1A to the one shown in Fig. 1B. That is, as indicated by the white arrow in Fig. 1B, the engine 5 in the engine room 4 is displaced backward, its protrusion 5a pressing the upper part of the dash panel 2 and causing a large backward displacement of the upper part of the dash panel 2, while the lower part that is reinforced by the reinforcing member 3 is displaced backward relatively less.

With this backward displacement of the dash panel 2, while the upper coupling bracket part 10 of the pedal bracket 7 is pressed and moved largely to the back, the lower coupling bracket part 9 is not displaced largely and moves only slightly to the back, and therefore the pivotal support bracket part 8 is displaced diagonally downward and backward in a rotating manner, causing the clutch pedal 6 mounted to the pedal bracket 7 to rotate to the front and the pedal footrest surface 6a at its lower end to move forward. As a result, the distance between the lower end of the dash panel 2 and the pedal footrest surface 6a, which was L0 before the load input as shown in Fig. 1A, is reduced to L1 after the load input as shown in Fig. 1B. The pedal is thus reliably displaced relatively forward when a load is input to the front of the vehicle.

While the lower end of the lower coupling bracket part 9 is fixedly fastened to the reinforcing member 3 in the above-descried example, it is not necessarily to be directly fastened to the reinforcing member 3, and may be fastened to other part near the reinforcing member 3.

Further, while the lower coupling bracket part 9 shown as one example in the above embodiment has a predetermined strength itself so that it does not deform largely when a load is input, one alternative is to form an aperture or a notch in the rear part in the middle in the lengthwise direction of the lower coupling bracket part 9 to provide a fragile part 21, as indicated by the imaginary line in Fig. 1. Thereby, when the load is input, while the front part of the pivotal support bracket part 8 is supported by the lower coupling bracket part 9, the upper coupling bracket part 10 presses a rear part of the pivotal support bracket part 8 diagonally downward and backward, applying a moment of rotation to the pivotal support bracket part 8 as indicated by the arrow A, whereby the lower coupling bracket part 9 buckles forward and bent at the fragile part 21. The pivotal support bracket part 8 is thereby rotated as indicated by the arrow A, causing the clutch pedal 6 to move relatively forward even more reliably in a larger distance.

Further, while the example shown in the above embodiment is the pedal bracket 7 for pivotally supporting the crutch pedal 6, the present invention is not limited to clutch pedals and provides the same effects when applied to the pedal bracket of other pedals such as foot-operated parking pedals.

### INDUSTRIAL APPLICABILITY

As described above, according to the present invention, when a load of more than a predetermined level is input to the front of the vehicle, the pedal bracket moves diagonally downward and backward in a rotating manner, whereby the pedal bracket and the upper part of the pedal supported by the bracket are rotated downward by the backward displacement, causing the lower part of the pedal to move relatively forward, and the backward movement of the lower part of the pedal is thus reduced.

## Claims

1. A pedal bracket mounting structure **characterized in that** a reinforcing member (3) is provided to a lower part of a dash panel (2), a pivotal support bracket part (8) swingably supporting a pedal (6) and a part reinforced by the reinforcing member (3) are coupled together by a lower coupling bracket part (9), and the pivotal support bracket part (8) and an upper part of the dash panel (2) opposite a protrusion (5a) in an upper rear part of the engine (5) are coupled together by an upper coupling bracket part (10), a coupling part between the upper coupling bracket part (10) and the pivotal support bracket part (8) being located lower than a coupling part between the upper coupling bracket part (10) and the upper part of the dash panel (2), and a coupling part between the lower coupling bracket part (9) and the pivotal support bracket part (8) being located more forward than the coupling part between the upper coupling bracket part (10) and the pivotal support bracket part (8).

2. The pedal bracket mounting structure according to claim 1, wherein the lower coupling bracket part (9) is provided with a fragile part (21) in the middle in a lengthwise direction.

3. The pedal bracket mounting structure according to claim 2, wherein the fragile part (21) of the lower coupling bracket part (9) is an aperture.

4. The pedal bracket mounting structure according to claim 2, wherein the fragile part (21) of the lower coupling bracket part (9) is a notch.

5. The pedal bracket mounting structure according to claim 1, wherein the pedal (6) is a clutch pedal.

6. The pedal bracket mounting structure according to claim 1, wherein the pedal (6) is a foot-operated parking pedal.

## Patentansprüche

1. Pedalhalterungsanordnung, **dadurch gekennzeichnet,**
**dass** ein Verstärkungsteil (3) an einem unteren Abschnitt eines Armaturenbrettes (2) vorgesehen ist,
**dass** ein Schwenkhalterungsteil (8) zur Schwenkhalterung eines Pedals (6) und ein Teil, das durch das Verstärkungsteil (3) verstärkt wird, durch ein unteres Verbindungshalterungsteil (9) miteinander verbunden sind,
**dass** das Schwenkhalterungsteil (8) und ein oberer Abschnitt des Armaturenbrettes (2) gegenüber einem Vorsprung (5a) in einem oberen hinteren Bereich des Motors (5) durch ein oberes Verbindungshalterungsteil (10) miteinander verbunden sind, dass ein Verbindungssteil zwischen dem oberen Verbindungshalterungsteil (10) und dem Schwenkhalterungsteil (8) niedriger als ein Verbindungsteil zwischen dem oberen Verbindungshalterungsteil (10) und dem oberen Abschnitt des Armaturenbrettes (2) angeordnet ist, und
**dass** ein Verbindungsteil zwischen dem unteren Verbindungshalterungsteil (9) und dem Schwenkhalterungsteil (8) weiter vorn als das Verbindungssteil zwischen dem oberen Verbindungshalterungsteil (10) und dem Schwenkhalterungsteil (8) angeordnet ist.

2. Pedalhalterungsanordnung nach Anspruch 1, **dadurch gekennzeichnet, dass** das untere Verbindungshalterungsteil (9) in Längsrichtung in der Mitte mit einem geschwächten Bereich (21) versehen ist.

3. Pedalhalterungsanordnung nach Anspruch 2, **dadurch gekennzeichnet, dass** der geschwächte Bereich (21) des unteren Verbindungshalterungsteils (9) eine Öffnung ist.

4. Pedalhalterungsanordnung nach Anspruch 2, **dadurch gekennzeichnet, dass** der geschwächte Bereich (21) des unteren Verbindungshalterungsteils (9) eine Kerbe ist.

5. Pedalhalterungsanordnung nach Anspruch 1, **dadurch gekennzeichnet, dass** das Pedal (6) ein Kupplungspedal ist.

6. Pedalhalterungsanordnung nach Anspruch 1, **dadurch gekennzeichnet, dass** das Pedal (6) ein fußbetätigtes Feststellbremspedal ist.

## Revendications

1. Structure de montage de pédalier, **caractérisée en ce qu'**un élément de renforcement (3) est prévu sur une partie inférieure d'un tableau de bord (2), une partie de patte de fixation de support pivotante (8) supportant de manière oscillante une pédale (6) et une partie renforcée par l'élément de renforcement (3) sont couplées ensemble par une partie de patte de fixation de couplage inférieure (9), et la partie de patte de fixation de support pivotante (8) et une partie supérieure du tableau de bord (2) opposée à une saillie (5a) dans une partie arrière supérieure du moteur (5) sont couplées ensemble par une partie de patte de fixation de couplage supérieure (10), une partie de couplage entre la partie de patte de fixation de couplage supérieure (10) et la partie de patte de fixation de support pivotante (8) étant situées plus basses qu'une partie de couplage entre la partie de patte de fixation de couplage supérieure (10) et la partie supérieure du tableau de bord (2), et une partie de couplage entre la partie de patte de fixation de couplage inférieure (9) et la partie de patte de fixation de support pivotante (8) étant situées plus éloignées que la partie de couplage entre la partie de patte de fixation de couplage supérieure (10) et la partie de patte de fixation de support pivotante (8).

2. Structure de montage de pédalier selon la revendication 1, dans laquelle la partie de patte de fixation de couplage inférieure (9) est prévue avec une partie fragile (21) au milieu dans le sens de la longueur.

3. Structure de montage de pédalier selon la revendication 2, dans laquelle la partie fragile (21) de la partie de patte de fixation de couplage inférieure (9) est une ouverture.

4. Structure de montage de pédalier selon la revendication 2, dans laquelle la partie fragile (21) de la partie de patte de fixation de couplage inférieure (9) est une encoche.

5. Structure de montage de pédalier selon la revendication 1, dans laquelle la pédale (6) est une pédale d'embrayage.

6. Structure de montage de pédalier selon la revendication 1, dans laquelle la pédale (6) est une pédale de stationnement actionnée par le pied.
